(19) Europäisches Patentamt
European Patent Office
Office européen des brevets

(11) **EP 4 765 111 A1**

(12) **EUROPEAN PATENT APPLICATION**

(43) Date of publication:
**24.06.2026 Bulletin 2026/26**

(21) Application number: **25214259.1**

(22) Date of filing: **07.11.2025**

(51) International Patent Classification (IPC):
**G10L 15/24** (2013.01)      **G10L 15/26** (2006.01)
**G10L 15/22** (2006.01)

(52) Cooperative Patent Classification (CPC):
**G10L 15/26; G10L 15/24;** G10L 2015/228

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **20.12.2024 KR 20240192999**

(71) Applicant: **Samsung Electronics Co., Ltd.
Suwon-si, Gyeonggi-do 16677 (KR)**

(72) Inventors:
• **Son, Sanghyun**
  **Suwon-si, 16678 (KR)**
• **Kang, Eunhee**
  **Suwon-si, 16678 (KR)**
• **Kwon, Kinam**
  **Suwon-si, 16678 (KR)**
• **Seo, Geonseok**
  **Suwon-si, 16678 (KR)**
• **Son, Jisoo**
  **Suwon-si, 16678 (KR)**
• **Yu, Junsang**
  **Suwon-si, 16678 (KR)**
• **Lee, Nagyeong**
  **Suwon-si, 16678 (KR)**
• **Lee, Hyong Euk**
  **Suwon-si, 16678 (KR)**

(74) Representative: **Arnold & Siedsma
Bezuidenhoutseweg 57
2594 AC The Hague (NL)**

(54) **TEXT DATA GENERATION FROM AUDIO-VISUAL INPUT**

(57)     A method includes: generating first text words by performing text recognition on a frame sequence component of an audio-video (AV) input; generating second text words by performing first speech-to-text (STT) conversion on an audio component of the AV input; determining a chronological sequence of groupings of the first text words and the second text words, each grouping including at least one of the first text words and at least one of the second text words, wherein the groupings are formed based on inter-frame similarities computed between frames of the frame sequence; generating keywords of the respective groupings; and generating output text words by performing second STT conversion on the audio component of AV input, wherein the second STT conversion is informed by the keywords.

FIG. 1

# EP 4 765 111 A1

**Description**

BACKGROUND

1. Field

The following description relates to a method and device with text data generation.

2. Description of Related Art

Speech recognition technology processes human voice so that a computer may understand the voice. Typically, with speech recognition technology, phonemes of speech may be analyzed, and words and sentences may be generated based on the phonemes. Specifically, an acoustic model may be used to convert voice into phonemes, which are sound units, and a language model may be used to generate words and sentences by combining the phonemes. The acoustic model and the language model may be based on various probabilistic models and/or various artificial intelligence (AI) models. A voice command may be processed, or text corresponding to the speech may be generated by speech recognition. The latter may be speech-to-text conversion.

SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

In one general aspect, a method of generating text data includes: determining key frames of an image sequence of input audio visual (AV) data, wherein sub-sections of the AV data respectively correspond to the key frames, and wherein the sub-sections include a first sub-section and a second sub-section; generating first base text data by performing character recognition on the image sequence, wherein first sub-text components of the first base text data respectively correspond to the sub-sections; generating second base text data by performing primary speech-to-text (STT) conversion on an audio component of the input AV data, wherein the audio component of the input AV data includes sub-audio sections respectively corresponding to the sub-sections, and wherein second sub-text components of the second base text data respectively correspond to the sub-sections; forming a first sub-section text component based on one of the first sub-section text components that corresponds to the first sub-section and based on one of the second sub-text components that corresponds to the first sub-section; and generating first sub-output text data of the first sub-section by performing, based on the first sub-section text component, secondary STT conversion on a first of the sub-audio components that corresponds to the first sub-section.

The method may further include: extracting third base text data from a reference material associated with the input AV data.

The method may further include: segmenting the third base text data into third sub-text components.

The performing the secondary STT conversion on the first sub-audio component may also be based on one of the third sub-text components that corresponds to or is mapped to the first sub-section.

The first sub-text components and the second sub-text components may be determined by: performing first data segmentation on the first base text data and the second base text data according to the sub-sections; performing second data segmentation on the third base text data independent of the sub-sections; and mapping, to the sub-sections, the first sub-text components, the second sub-text components, and the third sub-text components, as determined by the first data segmentation and the second data segmentation.

The mapping of the first sub-text components, the second sub-text components, and the third sub-text components to the sub-sections may be based on first similarities between the first sub-text components and the third sub-text components and second similarities between the second sub-text components and the third sub-text components.

The extracting of the third base text data may include: extracting the third base text data from a text component and an image component of the reference material.

The method may further include: forming a second sub-output text component based on one of the first sub-section text components that corresponds to the second sub-section and based on one of the second sub-text components that corresponds to the second sub-section; and generating second sub-output text data of the second sub-section by performing, based on the second sub-output text component, the secondary STT conversion on a second sub-audio component that corresponds to the second sub-section.

The generating of the first sub-output text data may include: determining first sub-section keywords from the first sub-section text component using a language model; and performing the secondary STT conversion on the first sub-audio component based on the first sub-section keywords.

The generating of the second base text data may be performed by one or more processors of a first type, the determining of the key frames, the generating of the first base text data, and determining of the first sub-text components and the second sub-text components may be performed by one or more processors of a second type, and the determining of the first sub-section keywords may be performed by one or more remote processors.

In another general aspect, a method performed by one or more computing devices includes: generating first text words by performing text recognition on a frame sequence component of an audio-video (AV) input; generating second text words by performing first speech-to-text (STT) conversion on an audio component of the AV input; determining a chronological sequence of groupings of the first text words and the second text words, each grouping including at least one of the first text words and at least one of the second text words, wherein the groupings are formed based on inter-frame similarities computed between frames of the frame sequence; generating keywords of the respective groupings; and generating output text words by performing second STT conversion on the audio component of AV input, wherein the second STT conversion is informed by the keywords.

In the method, keywords may be generated by inputting the groupings to a langue model that generates the keywords, the output text words may respectively correspond to the groupings, and the similarities may be pixel-based similarities.

A non-transitory computer-readable storage medium storing instructions that, when executed by a processor, cause the processor to perform any of the methods.

In another general aspect, an electronic device includes: one or more processors; and a memory storing instructions that when executed by the processor cause the electronic device to: determine sub-sections of audio visual (AV) data according to similarities between image frames of an image sequence of input audio visual (AV) data, and wherein the sub-sections include a first sub-section and a second sub-section; generate first base text data by performing character recognition on the image sequence, wherein first sub-text components of the first base text data respectively correspond to the sub-sections; generate second base text data by performing primary speech-to-text (STT) conversion on an audio component of the input AV data, wherein the audio component of the input AV data includes sub-audio sections respectively corresponding to the sub-sections, and wherein second sub-text components of the second base text data respectively correspond to the sub-sections; determine a first sub-section text component based on one of the first sub-section text components that corresponds to the first sub-section and based on one of the second sub-text components that corresponds to the first sub-section; and generate first sub-output text data of the first sub-section by performing secondary STT conversion, according to the first sub-section text component, on a first of the sub-audio components that corresponds to the first sub-section.

The instructions, when executed by the one or more processors, may cause the electronic device to: extract third base text data from a reference material associated with the input AV data.

The instructions, when executed by the one or more processors, may cause the electronic device to: determine third sub-text components of the third base text data based on a segmentation of the reference material.

The generating the first sub-output text data may be further based on one of the third sub-text components that corresponds to or is mapped to the first sub-section.

The instructions, when executed by the one or more processors, may cause the electronic device to: perform first data segmentation on the first base text data and the second base text data according to the sub-sections, perform second data segmentation on the third base text data based on the segmentation, and map, to the sub-sections, the first sub-text components, the second sub-text components, and the third sub-text components, which are determined by the first data segmentation and the second data segmentation.

The mapping the first sub-text components, the second sub-text components, and the third sub-text components to the sub-sections may be based on first similarities between the first sub-text components and the third sub-text components and second similarities between the second sub-text components and the third sub-text components.

The instructions, when executed by the one or more processors, may cause the electronic device to: determine a second sub-output text component based on one of the first sub-section text components that corresponds to the second sub-section and based on one of the second sub-text components that corresponds to the second sub-section; and generate second sub-output text data of the second sub-section by performing, based on the second sub-output text component, the secondary STT conversion on a second sub-audio component that corresponds to the second sub-section.

Other features and aspects will be apparent from the following detailed description, the drawings, and the claims.

BRIEF DESCRIPTION OF THE DRAWINGS

FIG. 1 schematically illustrates operations of generating output text data corresponding to input audio visual (AV) data, according to one or more embodiments.

FIG. 2 illustrates an example of data used in a process of generating output text data based on input AV data, according to one or more embodiments.

FIG. 3 illustrates an example of relations among an image sequence, key frames, sub-sections, audio components, and reference data, according to one or more embodiments.

FIG. 4 illustrates an example of sub-output text data of output text data, according to one or more embodiments.

FIG. 5 illustrates an example of a keyword extraction operation of a language model, according to one or more embodiments.

FIG. 6 illustrates an example of a text correction operation of a language model, according to one or more embodiments.

FIGS. 7 to 9 illustrate an example of a process of generating output text data based on parallel processing of a plurality of processors, according to one or more embodiments.

FIG. 10 illustrates a method of generating text data, according to one or more embodiments.

FIG. 11 illustrates an example of a configuration of an electronic device, according to one or more embodiments.

Throughout the drawings and the detailed description, unless otherwise described or provided, the same or like drawing reference numerals will be understood to refer to the same or like elements, features, and structures. The drawings may not be to scale, and the relative size, proportions, and depiction of elements in the drawings may be exaggerated for clarity, illustration, and convenience.

DETAILED DESCRIPTION

The following detailed description is provided to assist the reader in gaining a comprehensive understanding of the methods, apparatuses, and/or systems described herein. However, various changes, and modifications of the methods, apparatuses, and/or systems described herein will be apparent after an understanding of the disclosure of this application. For example, the sequences of operations described herein are merely examples, and are not limited to those set forth herein, but may be changed as will be apparent after an understanding of the disclosure of this application, with the exception of operations necessarily occurring in a certain order. Also, descriptions of features that are known after an understanding of the disclosure of this application may be omitted for increased clarity and conciseness.

The features described herein may be embodied in different forms and are not to be construed as being limited to the examples described herein. Rather, the examples described herein have been provided merely to illustrate some of the many possible ways of implementing the methods, apparatuses, and/or systems described herein that will be apparent after an understanding of the disclosure of this application.

The terminology used herein is for describing various examples only and is not to be used to limit the disclosure. The articles "a," "an," and "the" are intended to include the plural forms as well, unless the context clearly indicates otherwise. As used herein, the term "and/or" includes any one and any combination of any two or more of the associated listed items. As nonlimiting examples, terms "comprise" or "comprises," "include" or "includes," and "have" or "has" specify the presence of stated features, numbers, operations, members, elements, and/or combinations thereof, but do not preclude the presence or addition of one or more other features, numbers, operations, members, elements, and/or combinations thereof.

Throughout the specification, when a component or element is described as being "connected to," "coupled to," or "joined to" another component or element, it may be directly "connected to," "coupled to," or "joined to" the other component or element, or there may reasonably be one or more other components or elements intervening therebetween. When a component or element is described as being "directly connected to," "directly coupled to," or "directly joined to" another component or element, there can be no other elements intervening therebetween. Likewise, expressions, for example, "between" and "immediately between" and "adjacent to" and "immediately adjacent to" may also be construed as described in the foregoing.

Although terms such as "first," "second," and "third", or A, B, (a), (b), and the like may be used herein to describe various members, components, regions, layers, or sections, these members, components, regions, layers, or sections are not to be limited by these terms. Each of these terminologies is not used to define an essence, order, or sequence of corresponding members, components, regions, layers, or sections, for example, but used merely to distinguish the corresponding members, components, regions, layers, or sections from other members, components, regions, layers, or sections. Thus, a first member, component, region, layer, or section referred to in the examples described herein may also be referred to as a second member, component, region, layer, or section without departing from the teachings of the examples.

Unless otherwise defined, all terms, including technical and scientific terms, used herein have the same meaning as commonly understood by one of ordinary skill in the art to which this disclosure pertains and based on an understanding of the disclosure of the present application. Terms, such as those defined in commonly used dictionaries, are to be interpreted as having a meaning that is consistent with their meaning in the context of the relevant art and the disclosure of the present application and are not to be interpreted in an idealized or overly formal sense unless expressly so defined herein. The use of the term "may" herein with respect to an example or embodiment, e.g., as to what an example or embodiment may include or implement, means that at least one example or embodiment exists where such a feature is included or implemented, while all examples are not limited thereto.

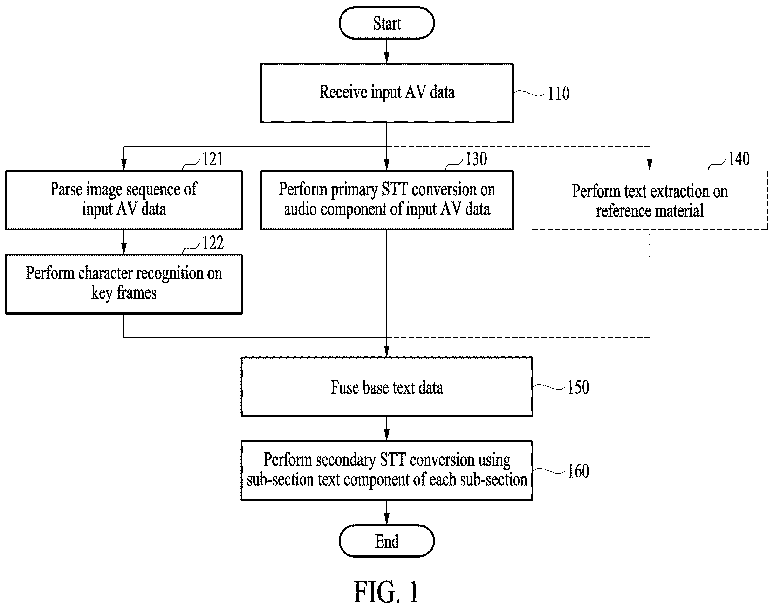

FIG. 1 illustrates operations of generating output text data corresponding to input audio visual (AV) data, according to one or more embodiments. Referring to FIG. 1, operations 110 to 160 of an electronic device may generate output text data corresponding to input AV data. For example, the output text data may be a subtitle of the input AV data (for example, rendered and overlayed), but is not limited thereto. For example, the output text data may be stored in association with the input AV data for various offline uses. For example, pieces of output text data may be stored in association with the parts of the input AV data from which they were derived. The input AV data may include an image/frame sequence and an audio component. The image sequence may be a series of image frames (e.g., video frames), for example. The image sequence and the audio component may be temporally synchronized (for example, in a multimedia package format such as mp4, mkv, etc.).

The electronic device may generate the output text data corresponding to the input AV data by performing conditional speech-to-text (STT) conversion. The STT may be based on speech recognition. The output text data may be a result of speech recognition on the audio component of the input AV data. Various probabilistic models and/or various artificial intelligence (AI) models may be used for speech recognition. For example, an acoustic model and/or a language model may be applied to the audio component to perform speech recognition. The acoustic model may convert the speech into phonemes, which are sound units, and the language model may generate a word and a sentence by combining the phonemes. For example, an AI model may include a deep learning-based neural network model. The electronic device may improve the accuracy of STT conversion by performing conditional STT conversion by referencing the text data when performing STT conversion.

In operation 110, the electronic device may receive input AV data. In operation 121, the electronic device may parse an image sequence of the input AV data. Based on a parsing result, key frames of the image sequence may be determined. According to an embodiment, the electronic device may determine the key frames based on similarities between image frames in the image sequence (any means by which inter-frame similarities are calculated may be used to find key frames). For example, when a difference between a first image frame and a second image frame (e.g., a pixel-based difference), which are consecutive image frames of the image frames, is greater than a difference threshold, the electronic device may determine the first image frame to be a key frame. The difference between the first image frame and the second image frame may include a difference between corresponding pixels of the first image frame and the second image frame. For example, the electronic device may determine the key frames based on Equation 1 below.

$$\text{Equation 1}$$

$$\left\| I_t - I_{t-1} \right\|_2^2 > T$$

In Equation 1, It denotes an image frame at a time point t, $I_{t-1}$ denotes an image frame at a time point t-1, and T denotes a difference threshold. It and $I_{t-1}$ may be consecutive image frames. $\left\| I_t - I_{t-1} \right\|_2^2$ denotes a square value of L2 norm between pixels of It and $I_{t-1}$. That is, $\left\| I_t - I_{t-1} \right\|_2^2$ denotes a difference between It and $I_{t-1}$. Instead of $\left\| I_t - I_{t-1} \right\|_2^2$, another equation for representing the difference between It and $I_{t-1}$ may be used. When Equation 1 is satisfied, It may be determined to be a key frame and similarity analysis may begin anew starting with the next image frame. In brief, a key frame is a representative frame of a sequence of sufficiently-similar image frame(s).

The key frames may be determined in various other manners (for example, using other types of inter-frame spatial differences, inter-frame semantic differences, or the like). A duplicate extract prevention method may be used for key frame extraction. For example, a minimum interval may be set between key frames to prevent extracting duplicated key frames from the image sequence. As another example, key frames having similar text data may be determined to be duplicate key frames. The text data of the finally-determined key frames may be determined based on character recognition as described in operation 122.

In operation 122, the electronic device may perform character recognition on the key frames. For example, the character recognition may include optical character recognition (OCR), but is not limited thereto. Text data of each key frame may be determined based on the character recognition performed thereon. The text data of a key frame determined based on the character recognition may be referred to as first base text data. The OCR may be performed in other ways. For example, OCR may be performed on every (or some) frames, and only the OCR results of selects frames (e.g., key frames, or frames determined from the key frames) may be used.

In operation 130, the electronic device may perform primary STT conversion on an audio component of the input AV data. Text data may be determined based on the primary STT conversion. The text data determined based on the primary STT conversion may be referred to as second base text data. Although later segmented per the key framed subsections, initially, due to the continuous temporal nature of STT conversion, the primary STT conversion may be performed on the input AV data without regard for the sub-sections (or key frames). This may generate pieces (e.g., text words/phrases) of the second base text data which are timed to the input AV data (e.g., forming a chronological sequence of the words/phrases synchronized to the input AV data). The timed words/phrases (e.g., keywords) may then be segmented into groups respectively corresponding to the sub-sections (also referred to herein as second sub-text components). Incidentally, "text word/phrases", "output text", and the like, as used herein, is defined to also include representations of text/words/phrases, for example, embedding vectors, tokens, and the like, and does not mean only text per se.

The primary STT conversion in operation 130 is a separate conversion than the secondary STT conversion in operation 160. The primary STT conversion may involve unconditional conversion or draft conversion, and the secondary STT conversion may involve conditional conversion or fine conversion (e.g., conversion informed by a clue or additional information, such as keywords derived from tine input AV data, as described below). Unlike the primary STT conversion, in the secondary STT conversion, core keywords of respective sub-sections (of the input AV data) may be provided as clues for the secondary STT conversion; the sub-sections may be defined by respective key frames, with a given sub-section starting with (and including) one key frame and including any frames up to (but not including) the next key frame.

Various known STT methods may be used for the primary and secondary STT conversions. For example, various probabilistic models and/or various AI models may be used for the primary STT conversion and the secondary STT conversion. For example, the AI model may include a deep learning-based neural network model. For example, a speech recognition-based AI model may be used for the primary STT conversion and the secondary STT conversion. The primary STT conversion model may be distinct from the secondary STT conversion model. The primary STT conversion model may generate text data based on the input AV data (or the audio component thereof). The secondary STT conversion model may generate text data based on the input AV data (or the audio component thereof) and the core keywords. The secondary STT conversion model may generate the text data by increasing the probability that the core keywords are included in the text data generated thereby. The same model may or may not be used for the primary and secondary STT conversion.

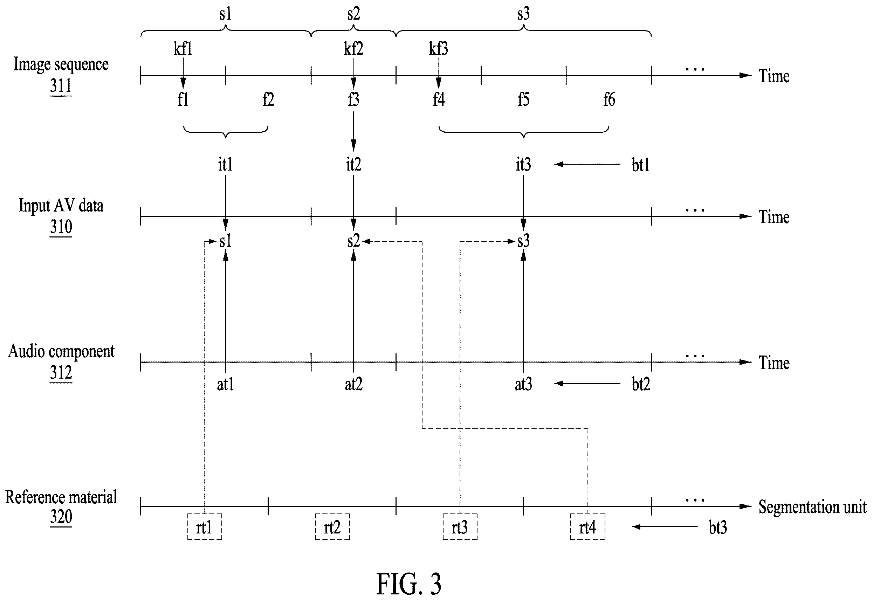

In operation 150, the electronic device may fuse the base text data (e.g., the first base text data, the second base text data, and/or third base text data (discussed below)). Fusing may involve concatenation, merging, grouping, etc.). To do so, first the electronic device may determine first sub-text components in the first base text data and second sub-text components in the second base text data, which may be done by segmenting the first base text data and the second base text data based on the sub-sections of the input AV data (which correspond to or are defined by the key frames). A sub-section is a partial section of a total-time section of the input AV data (see FIG. 3). The sub-sections may be defined by the key frames, as noted above. For example, when the image sequence includes N key frames, the total-time section of the input AV data may be segmented into N sub-sections based on the key frames, in which case there will be N first sub-text components in the first base text data and N second sub-text components in the second base text data. An i-th sub-text component (among N sub-text components) may be formed based on the i-th first sub-text component, the i-th second sub-text component, and (if available), the i-th third sub-text component. Here, the formation may involve, for example, fusing the i-th sub-text components and deriving a keyword (or keywords) from the fused sub-text components, for example, by inputting the fused i-th sub-text components into a language model that infers keyword(s) therefrom.

The electronic device may determine a sub-section text component of a given sub-section by fusing the first sub-text component of the given sub-section and the second sub-text component of the given sub-section (this may be done for each sub-section, thus forming a sub-text component of each the N sub-sections). When performed for the N sub-sections, N sub-section text components may be determined. For example, the electronic device may determine the sub-section text components from the first sub-text components and the second sub-text components, respectively.

In operation 160, the electronic device may perform the secondary STT conversion using the sub-section text components of the respective sub-sections (the fused text components). The audio component of the input AV data may be segmented into sub-audio components (which correspond to the sub-sections). The segmenting may be based on the sub-sections. The electronic device may perform the secondary STT conversion on the sub-audio components based on respectively corresponding sub-section text components (second STT conversion is performed on a given sub-audio section based on the sub-text component of the corresponding sub-section). For example, the electronic device may perform the secondary STT conversion on the first of the sub-audio components based on the first of the sub-section text components and may perform the secondary STT conversion on the second of the sub-audio components based on the second of the sub-section text components. According to the secondary STT conversion on the first of the sub-audio components, first sub-output text data of the first sub-section may be generated, and, according to the secondary STT conversion on the second sub-audio component, second sub-output text data of the second sub-section may be generated. The output text data may be determined by merging the sub-output text data of the sub-sections.

As noted, the secondary STT conversion may be performed with conditional conversion or fine conversion. Unlike the primary STT conversion, in the secondary STT conversion, sets of core keywords of the respective sub-sections may be provided as clues for the STT conversion thereof. The clues (e.g., sets of keywords) for the secondary STT conversion of the respective each sub-audio components may be generated based on the respective sub-section text components (fused text data). For example, the electronic device may determine sub-section keywords from the sub-section text components of each of the sub-sections using the language model. The electronic device may perform the secondary STT conversion on the sub-audio component of each sub-section based on the sub-section keywords of the sub-sections. The number of sub-section keywords of each sub-section may be predetermined (i.e., the number of keywords in each set of keywords). When the number of keywords included in a sub-section text component is too great, the performance of secondary STT using the keywords may be degraded. Satisfactory performance of secondary STT may be assured by limiting the number of keywords used for secondary STT and selecting the keywords using the language model.

The language model may be any of various probabilistic models and/or various AI models. For example, an AI model may include a deep learning-based neural network model. The language model used for keyword extraction and/or text correction may be distinguished from the language model used for speech recognition. For example, the language model used for keyword extraction and/or text correction may be a generative language model such as a large language model (LLM).

In some embodiments, when there is a reference material associated with the input AV data, the text data may be generated by also referencing the reference material. The reference material may be related to the input AV data. For example, when the input AV data is a lecture video, the reference material may include lecture materials or a book used for the lecture. For example, the lecture material may be in a presentation format (e.g., a slide deck), but is not limited thereto. Additionally, when the input AV data is video content, such as a movie, a drama, news, a television (TV) show, or a documentary, the reference material may include a script and introductory materials of the video content.

In operation 140, the electronic device may perform text extraction on the reference material. The reference material may include a text component and/or an image component related to the input AV data. The electronic device may extract the text component related to the input AV data from the reference material. The electronic device may convert an image of the reference material into text and may extract the text from the image. For example, the electronic device may convert the image of the reference material into the text using a multimodal foundation model (MMFM).

Operations 121, 122, 130, and 140 may be performed to collect as much text data as possible from the input AV data and the reference material. When the reference material does not exist, operation 140 may be omitted (which does not imply that any other operations are required).

The text data extracted from the reference material may be referred to as third base text data. The electronic device may extract the third base text data from a text component and/or an image component of the reference material.

In this case, the electronic device may fuse the first base text data, the second base text data, and the third base text data when fusing the base text data in operation 150. The electronic device may determine first sub-text components of the first base text data and second sub-text components of the second base text data by segmenting the first base text data and the second base text data based on sub-sections of the input AV data defined by the key frames. The electronic device may determine third sub-text components of the third base text data based on a segmentation unit of the reference material. For example, the segmentation unit may include a page, a chapter, or a section. The segmentation units may be different from the sub-sections. For example, the number of sub-sections may be N and the number of segmentation units may be M (e.g., M pages).

The electronic device may determine a sub-section text component of a sub-section by fusing the first sub-text component of the sub-section, the second sub-text component of the sub-section, and whichever third sub-text component corresponds to (e.g., is mapped to) the sub-section (this may be done for each sub-section). For example, among the first sub-text components, the second sub-text components, and the third sub-text components, the electronic device may determine the first sub-section text component of the first sub-section of the sub-sections. Accordingly, N sub-section text components may be determined by the fusing and possibly other operations (e.g., by deriving keywords from the sub-section text components).

The third sub-text components may be mapped onto corresponding sub-section(s). The electronic device may perform first data segmentation on the first base text data and the second base text data based on the sub-sections and may perform second data segmentation on the third base text data based on the segmentation unit. The electronic device may map, to the sub-sections, the first sub-text components, the second sub-text components, and the third sub-text components determined by the first data segmentation and the second data segmentation.

The electronic device may map, to the sub-sections, the first sub-text components, the second sub-text components, and the third sub-text components based on similarities among the first sub-text components, the second sub-text components, and the third sub-text components. For example, the electronic device may map, to the sub-sections, the first sub-text components, the second sub-text components, and the third sub-text components based on first similarities between the first sub-text components and the third sub-text components and second similarities between the second sub-text components and the third sub-text components. Equation 2 may be used for a mapping operation.

Equation 2

$$index = \text{argmax}_j\, w_{STT}\, sim(at_i, rt_j) + w_{OCR}\, sim(it_i, rt_j)$$

In Equation 2, i denotes a sub-section identifier, index (of which there may be multiple) denotes a segmentation unit identifier, $w_{STT}$ and $w_{OCR}$ denote adjustment weights, and sim(x, y) denotes a similarity between x and y. For example, for sim(x, y), embedding data for each x and y may be generated and a similarity (e.g., a cosine similarity) between the embedding data of x and the embedding data of y may be calculated. $it_i$ denotes a first sub-text component, $at_i$ denotes a second sub-text component, and $rt_j$ denotes a third sub-text component. In determining the index through the adjustment weight, the weights of $it_i$ and $at_i$ may be adjusted. When i is given, a value of j that minimizes the right-hand side of Equation 2 may be determined to be the index. For example, when i is 1 and j that minimizes the right-hand side of Equation 2 is 1, the first segmentation unit may be mapped to the first sub-section. In this case, the first sub-text component of the first sub-section, the second sub-text component of the first sub-section, and the third sub-text component of the first segmentation unit may be determined to be the first sub-section text component. Any technique of mapping segmentation units to sub-sections may be used.

In operation 160, the electronic device may perform the secondary STT conversion using the sub-section text component of each sub-section determined based on the first sub-text components, the second sub-text components, and the third sub-text components. For example, the electronic device may perform the secondary STT conversion on the first sub-audio component based on the first of the sub-section text components and may perform the secondary STT conversion on the second sub-audio component based on the second of the sub-section text components. According to the secondary STT conversion on the first sub-audio component, first sub-output text data of the first sub-section may be generated, and, according to the secondary STT conversion on the second sub-audio component, second sub-output text data of the second sub-section may be generated.

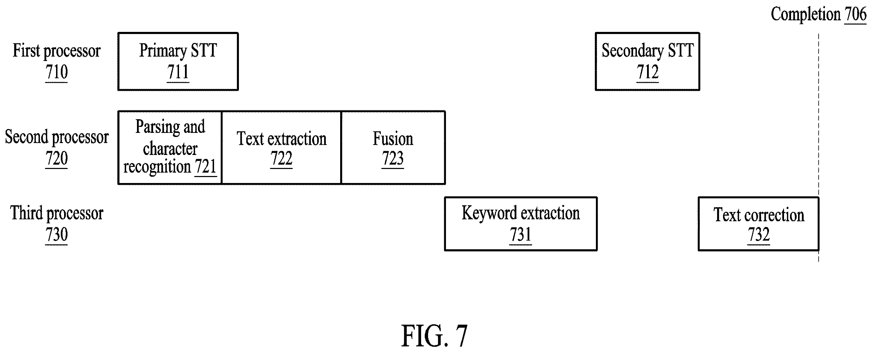

In some embodiments, parallel processing on parsing and character recognition in operations 121 and 122, primary STT conversion in operation 130, text extraction in operation 140, fusion in operation 150, and secondary STT conversion in operation 160 may be performed (in various ways - see FIG. 7). For example, the primary STT conversion in operation 130 may be performed by one or more processors of a first type, the parsing and character recognition in operations 121 and 122, the text extraction in operation 140, and the fusion in operation 150 may be performed by one or more processors of a second type, and the secondary STT conversion in operation 160 may be performed by one or more remote processors. As described below, the one or more remote processors may further perform keyword extraction for the secondary STT conversion. For example, the processor of the first type may be a central processing unit (CPU), and the processor of the second type may be a graphics processing unit (GPU). However, the example is not limited thereto. The remote processor may be a processor of a remote device (e.g., a server of a data center) that provides an network application programming interface (API).

According to some embodiments, when the input AV data contains numerous technical terms (which tend to be inaccurately converted by conventional STT conversion), a high level of STT conversion accuracy may be achieved using the reference material. An alignment process between the reference material and the image frames may be automatically performed. A clue need not be provided by the user, and an optimal clue for each sub-section may be provided automatically. A high level of prior knowledge about the input AV data may be ensured by utilizing an appropriate reference material and a speech recognition result may be significantly improved by utilizing the prior knowledge.

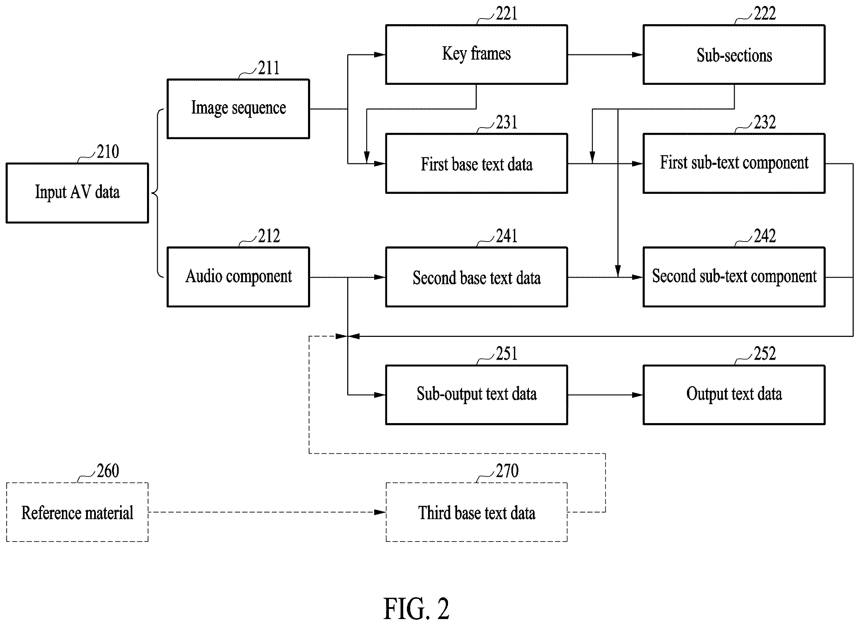

FIG. 2 illustrates an example of data used in a process of generating output text data based on input AV data, according to one or more embodiments. Referring to FIG. 2, input AV data 210 may include an image sequence 211 and an audio component 212. Key frames 221 may be determined based on a parsing operation on the image sequence 211 and sub-sections 222 corresponding to the key frames 221 may be determined.

First base text data 231 may be generated based on character recognition on the key frames 221 of the image sequence 211. Second base text data 241 may be generated based on primary STT conversion on the audio component 212. Based on data segmentation (which may be based on the sub-sections), first sub-text components 232 (of the first base text data 231) and second sub-text components 242 (of the second base text data 241) may be determined. In some implementations, the first base text data 231 may be generated based on one or more image frames corresponding to the key frames 221. For example, for a given keyframe, the first sub-text component thereof may be determined based on an average of the image frames in the sub-section, a highest-quality image frame in the sub-section may be OCR'd, and so forth. More generally, groupings of sub-text components may be obtained based on similarities between image frames.

Sub-output text data 251 of respectively corresponding sub-sections may be generated by performing secondary STT conversion on the respectively corresponding sub-sections of audio data in the audio component 212, which may be performed based on the respectively corresponding sub-section text components of the sub-sections 222 among the first sub-text components 232 and the second sub-text components 242. For example, the first sub-output text data of the first sub-section may be generated by performing the secondary STT conversion on the first sub-audio component (of the first sub-section) from the audio component 212, which may be performed based on the first of the first sub-section text component (that of the first sub-section) among the first sub-text components 232 and based on (ii) the first of the second sub-text component 242 (that of the first sub-section). Second sub-output text data of the second sub-section may be generated by performing the secondary STT conversion on the second sub-audio component (of the second sub-section) from the audio component 212, which may be performed based on (i) the second of the first sub-section text components (of the second sub-section) of the sub-sections 222 and the second of the second sub-text components (of the second sub-section).

According to some embodiments, a reference material 260 associated with the input AV data 210 may be used. Third base text data 270 may be extracted from the reference material 260. Third sub-text components of the third base text data may be determined based on segmentation units of the reference material 260 (which are not necessarily aligned with the sub-sections). The first sub-output text data may be generated by performing the secondary STT conversion on the first sub-audio component based on (i) the first sub-section text component (of the first sub-section) among the first sub-text components, the second sub-text component of the second sub-section, and the third sub-text component of the second sub-section.

FIG. 3 illustrates an example of relations among an image sequence, key frames, sub-sections, an audio component, and reference data, according to one or more embodiments. Referring to FIG. 3, for description, an image sequence 311 and corresponding audio component 312 of input AV data 310 are shown broken out from the input AV data 310 (although such data may be packaged together). The image sequence 311 may include image frames f1 to f6. As a result of parsing the image frames f1 to f6, key frames kf1 to kf3 may be determined/identified. For example, the key frames kf1 to kf3 may be the image frames f1, f3, and f4, respectively, but are not limited thereto. First base text data bt1 including it1, it2, and it3 ("it" standing for "image text", and "bt" standing for "base text")) may be generated based on character recognition performed on the key frames kf1 to kf3. Second base text data bt2 (including at1, at2, and at3 ("at" standing for "audio text")) may be generated based on primary STT conversion performed on the audio component 312.

Sub-sections s1 to s3 of input AV data 310 may be determined based on the key frames kf1 to kf3. As noted, the key frames kf1 to kf3 may define the sub-sections s1 to s3. First sub-text components it1 to it3 and second sub-text components at1 to at3 may be determined (e.g., segmented) based on the sub-sections s1 to s3. Regarding such determining based on the sub-sections, for example, any first text units (e.g., words/phrases) generated by the OCR'ing of image frame(s) (of the input AV data) in a given sub-section may be formed into the first sub-text component of the given sub-section. Similarly, any second text units generated by the primary STT conversion on the audio component (of the input AV data) in the given sub-section may be formed into the second sub-text component of the given sub-section.

The secondary STT conversion on each of the sub-sections s1 to s3 may be performed based on the respectively corresponding first sub-text components it1 to i3 and the respectively corresponding second sub-text components at1 to at3. For example, the secondary STT conversion may be performed on a first sub-audio component of the sub-section s1 (from the audio component 312) based on a first of the sub-text components (that of the sub-section s1). The first of the sub-text components may include (or be based on) the first of the first sub-text components (it1) and the first of the second sub-text components (at1).

According to some embodiments, a reference material 320 associated with the input AV data 310 may be used. Third base text data bt3 may be extracted from the reference material 320 and third sub-text components rt1 to rt4 of the third base text data bt3 may be determined based on a segmentation unit of the reference material 320.

The secondary STT conversion may be performed on each of the sub-sections s1 to s3 based on the first sub-text components it1 to it3, the second sub-text components at1 to at3, and the third sub-text components rt1 to rt4. For example, the secondary STT conversion may be performed on the first sub-audio component of the sub-section s1 from the audio component 312 based on the first of the sub-text components (that of the sub-section s1). The first of the sub-text components may include the first sub-text component it1, the second sub-text component at1, and the third sub-text component rt1.

The first base text data bt1 and the second base text data bt2 may be segmented based on the sub-sections s1 to s3 (or based on the key frames, or based on inter-frame similarities). The third base text data bt3 may be segmented based on the segmentation unit distinguished from the sub-sections s1 to s3. As a result, the first sub-text components it1 to it3, the second sub-text components at1 to at3, and the third sub-text components rt1 to rt4 may be determined.

The first sub-text components it1 to it3, the second sub-text components at1 to at3, and the third sub-text components rt1 to rt4 may be mapped to the sub-sections s1 to s3 based on similarities. For example, a first similarity between the first sub-text components it1 to it3 and the third sub-text components rt1 to rt4 and a second similarity between the second sub-text components at1 to at3 and the third sub-text components rt1 to rt4 may be used. As a result, the third sub-text component rt3 may be mapped to the sub-section s3 and the third sub-text component rt4 may be mapped to the sub-section s2. The third sub-text component rt2 having a similarity less than a mapping threshold may be removed.

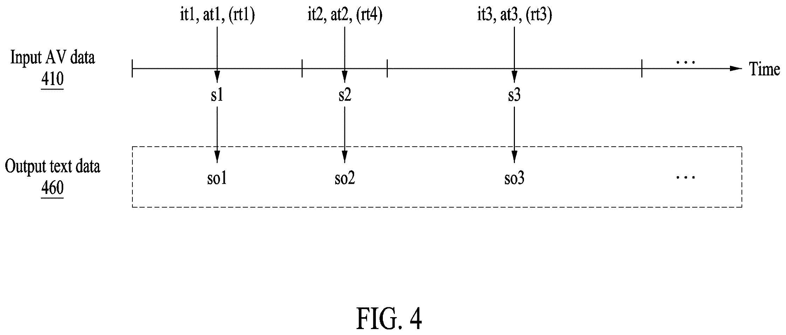

FIG. 4 illustrates an example of sub-output text data of output text data, according to one or more embodiments. Referring to FIG. 4, first sub-section text components lt1, at1, and rt1, second sub-section text components lt2, at2, and rt4, and third sub-section text components lt3, at3, and rt3 may be mapped to sub-sections s1 to s3, respectively, of input AV data 410.

The first sub-section text components lt1, at1, and rt1, the second sub-section text components lt2, at2, and rt4, and the third sub-section text components lt3, at3, and rt3 may be used for the secondary STT conversion on sub-audio components of the respective sub-sections s1 to s3 of the input AV data 410. For example, a predetermined number of first sub-section keywords may be determined from the first sub-section text components lt1, at1, and rt1, and the secondary STT conversion may be performed on the sub-audio components of the sub-section s1 based on the first sub-section keywords. A predetermined number of second sub-section keywords may be determined from the second sub-section text components lt1, at2, and rt4, and the secondary STT conversion may be performed on the sub-audio component of the sub-section s2 based on the second sub-section keywords.

In response to the secondary STT conversion on the sub-audio component of the sub-section s1, sub-output text data so1 of the sub-section s1 may be generated; in response to the secondary STT conversion on the sub-audio component of the sub-section s2, sub-output text data so2 of the sub-section s2 may be generated; and in response to the secondary STT conversion on the sub-audio component of the sub-section s3, sub-output text data so3 of the sub-section s3 may be generated. Output text data 460 may be the sub-output text data so1, so2, and so3.

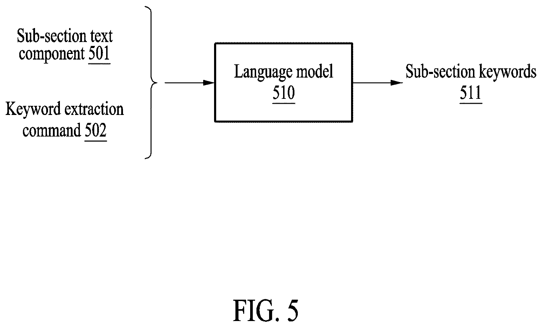

FIG. 5 illustrates an example of a keyword extraction operation of a language model, according to one or more embodiments. Referring to FIG. 5, a language model 510 may generate sub-section keywords 511 based on a sub-section text component 501 and a keyword extraction command 502. For example, first sub-section keywords may be generated based on the first sub-section text component 501. The keyword extraction command 502 may include a predetermined number of keywords and/or a priority of the sub-text components. The keyword extraction command 502 may include a prompt. For example, the keyword extraction command 502 may be written as "Select the 10 most important words from the sub-section text component 501. If it is unclear which words are important, select words of the third sub-text component as a priority".

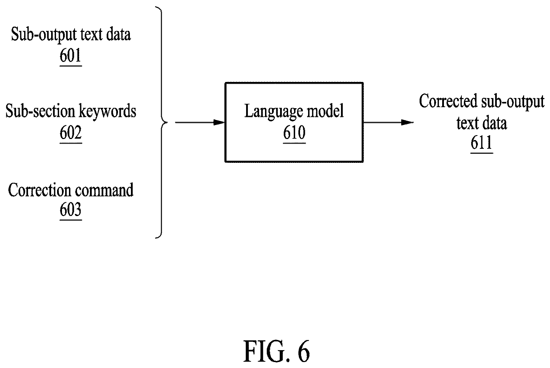

FIG. 6 illustrates an example of a text correction operation of a language model, according to one or more embodiments. Referring to FIG. 6, a language model 610 may generate sub-output text data 611 based on sub-output text data 601, sub-section keywords 602, and a correction command 603. For example, first corrected sub-output text data may be generated based on first sub-output text data and first sub-section keywords. The correction command 603 may include a constraint. The correction command 603 may include a prompt. For example, the correction command 603 may be written as "Correct any strange part in the sub-output text data 601. Do not change the tone as much as possible".

FIGS. 7 to 9 illustrate an example of a process of generating output text data based on parallel processing of a plurality of processors, according to one or more embodiments. Referring to FIG. 7, a first processor 710, a second processor 720, and a third processor 730 may be used to generate output text data. The first processor 710, the second processor 720, and the third processor 730 may (but need not be) be processors of different types. For example, the first processor 710 may be a processor of a first type, the second processor 720 may be a processor of a second type, and the third processor 730 may be a remote processor. For example, the processor of the first type may be a CPU, and the processor of the second type may be a GPU. However, the example is not limited thereto. The remote processor may be a processor of a remote device (e.g., a server of a data center) that provides a network API.

The first processor 710, the second processor 720, and the third processor 730 may generate output text data based on parallel processing. Tasks for generating the output text data may be distributed to the first processor 710, the second processor 720, and the third processor 730 based on task characteristics. For example, the first processor 710 may perform primary STT 711 and secondary STT 712. The second processor 720 may perform parsing and character recognition 721, text extraction 722, and fusion 723. The third processor 730 may perform keyword extraction 731 and text correction 732. The fusion 723 may be performed after the primary STT 711, the parsing and character recognition 721, and the text extraction 722. The fusion 723, the keyword extraction 731, the secondary STT 712, and the text correction 732 may be performed sequentially. Generating the output text data may be completed at a completion time 706.

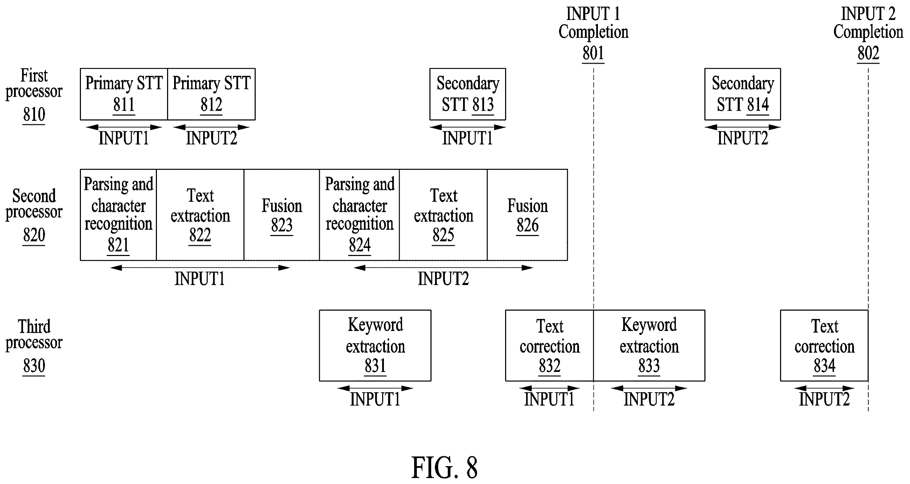

Referring to FIG. 8, INPUT1 represents a processing process of first input AV data and INPUT2 represents a processing process of second input AV data. Output text data of input AV data of multiple contents such as INPUT1 and INPUT2 may be generated. In this case, parallel processing may improve the processing efficiency of the multiple input AV data contents.

A first processor 810 may perform primary STT 811 of the first input AV data, primary STT 812 of the second input AV data, secondary STT 813 of the first input AV data, and secondary STT 814 of the second input AV data. The second processor 820 may perform parsing and character recognition 821, text extraction 822, and fusion 823 on the first input AV data, and may perform parsing and character recognition 824, text extraction 825, and fusion 826 on the second input AV data. The third processor 830 may perform keyword extraction 831 and text correction 832 on the first input AV data and may perform keyword extraction 833 and text correction 834 on the second input AV data.

The fusion 823 may be performed after the primary STT 811, the parsing and character recognition 821, and the text extraction 822. The fusion 823, the keyword extraction 831, the secondary STT 813, and the text correction 832 may be performed sequentially. Generating first output text data of the first input AV data may be completed at a completion time 801. The fusion 826 may be performed after the primary STT 812, the parsing and character recognition 824, and the text extraction 825. The fusion 826, the keyword extraction 833, the secondary STT 814, and the text correction 834 may be performed sequentially. Generating second output text data of the second input AV data may be completed at a completion time 802. Due to parallel processing, the completion time 802 may be at least twice as fast as the completion time 801.

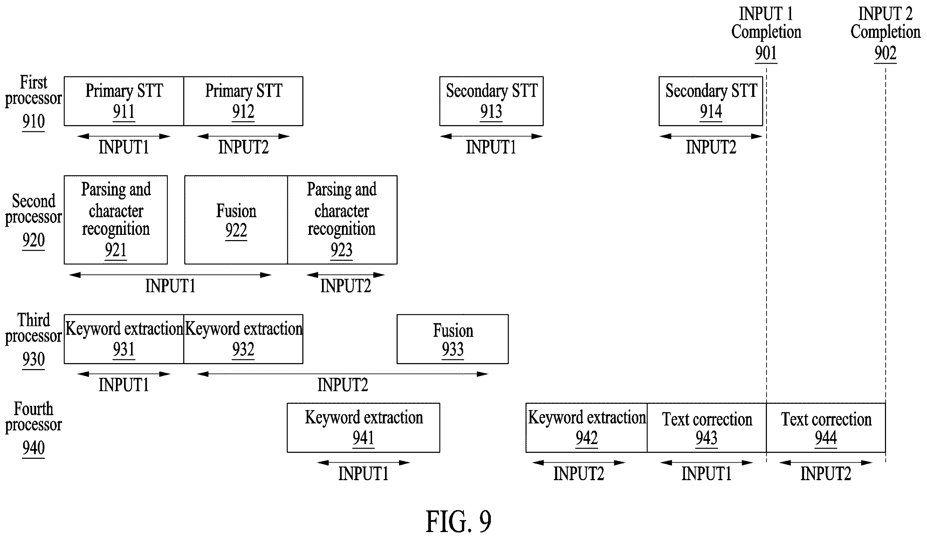

Referring to FIG. 9, a first processor 910, a second processor 920, a third processor 930, and a fourth processor 940 may be used to generate output text data. The second processor 920 and the third processor 720 may be the same type of processor. For example, the first processor 910 may be a processor of the first type, the second processor 920 and the third processor 930 may be processors of the second type, and the fourth processor 940 may be a remote processor. For example, the processor of the first type may be a CPU, and the processor of the second type may be a GPU. However, the example is not limited thereto. The remote processor may be a processor of a remote device (e.g., a server of a data center) that provides a network API.

A first processor 910 may perform primary STT 911 on first input AV data, primary STT 912 on second input AV data, secondary STT 913 on the first input AV data, and secondary STT 914 on the second input AV data. The second processor 920 and the third processor 930 may perform parsing and character recognition 921, text extraction 931, and fusion 922 on the first input AV data, and may perform parsing and character recognition 923, text extraction 932, and fusion 933 on the second input AV data. The parsing and character recognition 921, the text extraction 931, and the fusion 922 on the first input AV data and the parsing and character recognition 923, the text extraction 932, and the fusion 933 on the second input AV data may be appropriately allocated to the second processor 920 and the third processor 930. The fourth processor 940 may perform keyword extraction 941 on the first input AV data, keyword extraction 942 on the second input AV data, text correction 943 on the first input AV data and text correction 944 on the second input AV data.

The fusion 922 may be performed after the primary STT 911, the parsing and character recognition 921, and the text extraction 931. The fusion 922, the keyword extraction 941, the secondary STT 913, and the text correction 943 may be performed sequentially. Generating first output text data of the first input AV data may be completed at a completion time 901. The fusion 933 may be performed after the primary STT 912, the parsing and character recognition 923, and the text extraction 932. The fusion 933, the keyword extraction 942, the secondary STT 914, and the text correction 944 may be performed sequentially. Generating second output text data of the second input AV data may be completed at a completion time 902. Due to additional parallel processing by the second processor 920 and the third processor 930, the completion time 902 may be faster than the completion time 802 of FIG. 8.

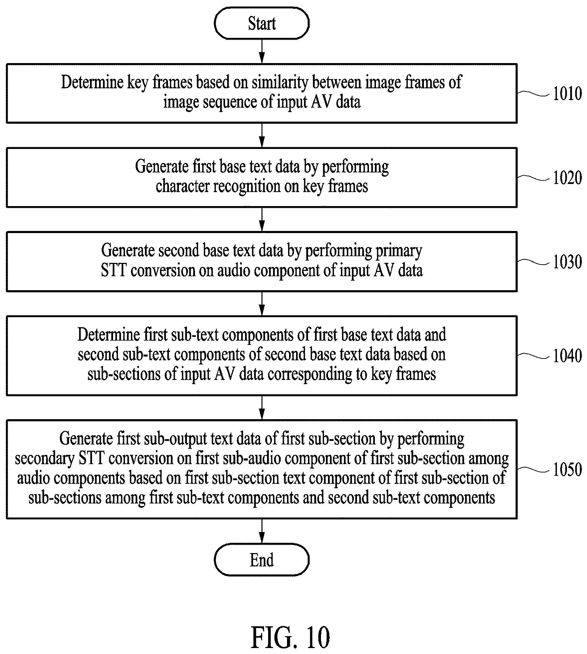

FIG. 10 illustrates a method of generating text data, according to one or more embodiments. Referring to FIG. 10, in operation 1010, the electronic device may determine key frames based on similarities between image frames of an image sequence of input AV data (e.g., between adjacent image frames). In operation 1020, the electronic device may generate first base text data by performing character recognition on the key frames. In operation 1030, the electronic device may generate second base text data by performing primary STT on an audio component of the input AV data. In operation 1040, the electronic device may determine first sub-text components of the first base text data and second sub-text components of the second base text data based on sub-sections of the input AV data corresponding to (or defined by) the key frames. In operation 1050, based on a first of the first sub-section text components (of a first sub-section) and a first of the second sub-text components, the electronic device may generate first sub-output text data of the first sub-section by performing secondary STT conversion on a first sub-audio component of the first sub-section from the audio component.

The electronic device may extract third base text data from a reference material associated with the input AV data.

The electronic device may determine third sub-text components of the third base text data based on a segmentation unit of the reference material.

Operation 1050 may include generating the first sub-output text data by performing secondary STT conversion on the first sub-audio component based on the first sub-section text component of the first sub-section, the second sub-text component of the first sub-section, and the third sub-text component of the first sub-section.

The determining of the first sub-text components and the second sub-text components in operation 1040 may include performing first data segmentation on the first base text data and the second base text data, performing second data segmentation on the third base text data based on a segmentation unit, and mapping the first sub-text components, the second sub-text components, and the third sub-text components, which are determined by the first data segmentation and the second data segmentation, to the sub-sections.

The mapping of the first sub-text components, the second sub-text components, and the third sub-text components on the sub-sections may include mapping the first sub-text components, the second sub-text components, and the third sub-text components to the sub-sections based on a first similarity between the first sub-text components and the third sub-text components and a second similarity between the second sub-text components and the third sub-text components.

The extracting of the third base text data may include extracting the third base text data from a text component and an image component of the reference material.

Based on a second sub-section text component of a second sub-section (of the sub-sections), the electronic device may generate second sub-output text data of the second sub-section by performing secondary STT conversion on a second sub-audio component of the second sub-section from the audio component (such secondary STT conversion being informed by (or guided by) the second sub-section text component).

Operation 1050 may include determining a predetermined number of first sub-section keywords from the first sub-section text component using a language model and performing secondary STT conversion on the first sub-audio component based on the first sub-section keywords.

The generating of the second base text data may be performed by one or more processors of a first type, and the determining of the key frames, the generating of the first base text data, and the determining of the first sub-text components and the second sub-text components may be performed by one or more processors of a second type, and the determining of the first sub-section keywords may be performed by one or more remote processors.

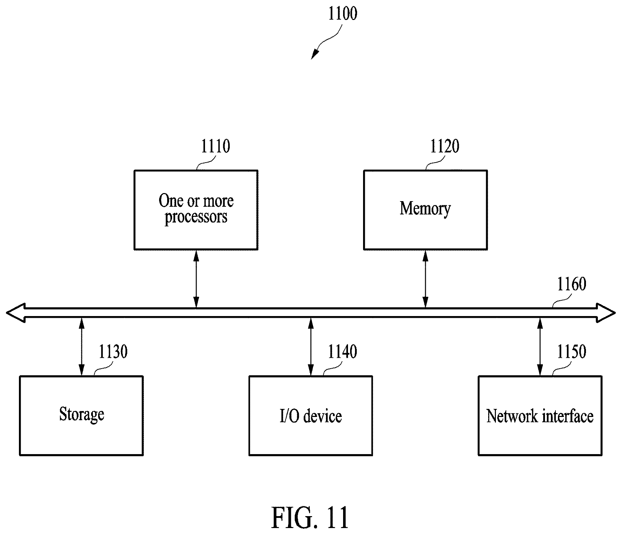

FIG. 11 illustrates an example of a configuration of an electronic device, according to one or more embodiments. Referring to FIG. 11, an electronic device 1100 may include one or more processors 1110, a memory 1120, a storage 1130, an input/output (I/O) device 1140, and a network interface 1150, which may communicate with each other via a communication bus 1160. For example, the electronic apparatus 1200 may be implemented as at least a portion of, for example, a mobile device such as a mobile phone, a smart phone, a personal digital assistant (PDA), a netbook, a tablet computer, a laptop computer, and the like, a wearable device such as a smart watch, a smart band, smart glasses, and the like, a home appliance such as a television (TV), a smart TV, a refrigerator, and the like, a security device such as a door lock and the like, and a vehicle such as an autonomous vehicle, a smart vehicle, and the like.

The one or more processors 1110 may execute instructions stored in the memory 1120 or the storage 1130. The instructions, when executed by the one or more processors 1110, may cause the electronic device to perform the operations described with reference to FIGS. 1 to 10. The memory 1120 may include a computer-readable storage medium or a computer-readable storage device. The memory 1120 may store instructions to be executed by the one or more processors 1110 and may store related information while software and/or an application is executed by the electronic device 1100.

The one or more processors 1110 may include one or more processors of a first type and or more processors of a second type. For example, the processor of the first type may be a CPU, and the processor of the second type may be a GPU. However, the example is not limited thereto. The one or more processors 1110 may cooperate with one or more remote processors. The remote processor may be a processor of a remote device (e.g., a server of a data center) that provides an API.

The storage 1130 may include a computer-readable storage medium or a computer-readable storage device. The storage 1130 may store a greater volume of information than the memory 1120 and may store the information for a long period of time. For example, the storage 1130 may include a magnetic hard disk, an optical disk, flash memory, a floppy disk, or other non-volatile memories known in the art.

The I/O device 1140 may receive an input from the user in traditional input manners through a keyboard and a mouse, and in new input manners such as a touch input, a voice input, and an image input. For example, the I/O device 1140 may include a keyboard, a mouse, a touch screen, a microphone, or any other device that detects the input from the user and transmits the detected input to the electronic device 1100. The I/O device 1140 may provide an output of the electronic device 1100 to the user through a visual, auditory, or haptic channel. The I/O device 1140 may include, for example, a display, a touchscreen, a speaker, a vibration generator, or any other device configured to provide the output to the user. The network interface 1150 may communicate with an external device via a wired or wireless network.

The computing apparatuses, the electronic devices, the processors, the memories, the displays, the information output system and hardware, the storage devices, and other apparatuses, devices, units, modules, and components described herein with respect to FIGS. 1-11 are implemented by or representative of hardware components. Examples of hardware components that may be used to perform the operations described in this application where appropriate include controllers, sensors, generators, drivers, memories, comparators, arithmetic logic units, adders, subtractors, multipliers, dividers, integrators, and any other electronic components configured to perform the operations described in this application. In other examples, one or more of the hardware components that perform the operations described in this application are implemented by computing hardware, for example, by one or more processors or computers. A processor or computer may be implemented by one or more processing elements, such as an array of logic gates, a controller and an arithmetic logic unit, a digital signal processor, a microcomputer, a programmable logic controller, a field-programmable gate array, a programmable logic array, a microprocessor, or any other device or combination of devices that is configured to respond to and execute instructions in a defined manner to achieve a desired result. In one example, a processor or computer includes, or is connected to, one or more memories storing instructions or software that are executed by the processor or computer. Hardware components implemented by a processor or computer may execute instructions or software, such as an operating system (OS) and one or more software applications that run on the OS, to perform the operations described in this application. The hardware components may also access, manipulate, process, create, and store data in response to execution of the instructions or software. For simplicity, the singular term "processor" or "computer" may be used in the description of the examples described in this application, but in other examples multiple processors or computers may be used, or a processor or computer may include multiple processing elements, or multiple types of processing elements, or both. For example, a single hardware component or two or more hardware components may be implemented by a single processor, or two or more processors, or a processor and a controller. One or more hardware components may be implemented by one or more processors, or a processor and a controller, and one or more other hardware components may be implemented by one or more other processors, or another processor and another controller. One or more processors, or a processor and a controller, may implement a single hardware component, or two or more hardware components. A hardware component may have any one or more of different processing configurations, examples of which include a single processor, independent processors, parallel processors, single-instruction single-data (SISD) multiprocessing, single-instruction multiple-data (SIMD) multiprocessing, multiple-instruction single-data (MISD) multiprocessing, and multiple-instruction multiple-data (MIMD) multiprocessing.

The methods illustrated in FIGS. 1-11 that perform the operations described in this application are performed by computing hardware, for example, by one or more processors or computers, implemented as described above implementing instructions or software to perform the operations described in this application that are performed by the methods. For example, a single operation or two or more operations may be performed by a single processor, or two or more processors, or a processor and a controller. One or more operations may be performed by one or more processors, or a processor and a controller, and one or more other operations may be performed by one or more other processors, or another processor and another controller. One or more processors, or a processor and a controller, may perform a single operation, or two or more operations.

Instructions or software to control computing hardware, for example, one or more processors or computers, to implement the hardware components and perform the methods as described above may be written as computer programs, code segments, instructions or any combination thereof, for individually or collectively instructing or configuring the one or more processors or computers to operate as a machine or special-purpose computer to perform the operations that are performed by the hardware components and the methods as described above. In one example, the instructions or software include machine code that is directly executed by the one or more processors or computers, such as machine code produced by a compiler. In another example, the instructions or software includes higher-level code that is executed by the one or more processors or computer using an interpreter. The instructions or software may be written using any programming language based on the block diagrams and the flow charts illustrated in the drawings and the corresponding descriptions herein, which disclose algorithms for performing the operations that are performed by the hardware components and the methods as described above.

The instructions or software to control computing hardware, for example, one or more processors or computers, to implement the hardware components and perform the methods as described above, and any associated data, data files, and data structures, may be recorded, stored, or fixed in or on one or more non-transitory computer-readable storage media. Examples of a non-transitory computer-readable storage medium include read-only memory (ROM), random-access programmable read only memory (PROM), electrically erasable programmable read-only memory (EEPROM), random-access memory (RAM), dynamic random access memory (DRAM), static random access memory (SRAM), flash memory, non-volatile memory, CD-ROMs, CD-Rs, CD+Rs, CD-RWs, CD+RWs, DVD-ROMs, DVD- Rs, DVD+Rs, DVD-RWs, DVD+RWs, DVD-RAMs, BD-ROMs, BD-Rs, BD-R LTHs, BD-REs, blue-ray or optical disk storage, hard disk drive (HDD), solid state drive (SSD), flash memory, a card type memory such as a multimedia card or a micro card (for example, secure digital (SD) or extreme digital (XD)), magnetic tapes, floppy disks, magneto-optical data storage devices, optical data storage devices, hard disks, solid-state disks, and any other device that is configured to store the instructions or software and any associated data, data files, and data structures in a non-transitory manner and provide the instructions or software and any associated data, data files, and data structures to one or more processors or computers so that the one or more processors or computers can execute the instructions. In one example, the instructions or software and any associated data, data files, and data structures are distributed over network-coupled computer systems so that the instructions and software and any associated data, data files, and data structures are stored, accessed, and executed in a distributed fashion by the one or more processors or computers.

While this disclosure includes specific examples, it will be apparent after an understanding of the disclosure of this application that various changes in form and details may be made in these examples without departing from the scope of the claims . The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components or their equivalents.

Therefore, in addition to the above disclosure, the scope of the disclosure may also be defined by the claims, and all variations within the scope of the claims are to be construed as being included in the disclosure.

**Claims**

1. A computer-implemented method of generating text data, the method comprising:

    determining key frames of an image sequence of input audio visual (AV) data, wherein sub-sections of the AV data respectively correspond to the key frames, and wherein the sub-sections include a first sub-section and a second sub-section;
    generating first base text data by performing character recognition on the image sequence, wherein first sub-text components of the first base text data respectively correspond to the sub-sections;
    generating second base text data by performing primary speech-to-text (STT) conversion on an audio component of the input AV data, wherein the audio component of the input AV data comprises sub-audio sections respectively corresponding to the sub-sections, and wherein second sub-text components of the second base text data respectively correspond to the sub-sections;
    forming a first sub-section text component based on one of the first sub-section text components that corresponds to the first sub-section and based on one of the second sub-text components that corresponds to the first sub-section; and
    generating first sub-output text data of the first sub-section by performing, based on the first sub-section text component, secondary STT conversion on a first of the sub-audio components that corresponds to the first sub-section.

2. The computer-implemented method of claim 1, further comprising:
    extracting third base text data from a reference material associated with the input AV data.

3. The computer-implemented method of claim 2, further comprising:
    segmenting the third base text data into third sub-text components.

4. The computer-implemented method of claim 3, wherein the performing the secondary STT conversion on the first sub-audio component is also based on one of the third sub-text components that corresponds to or is mapped to the first sub-section.

5. The computer-implemented method of claim 3 or 4, wherein the first sub-text components and the second sub-text components are determined by:

    performing first data segmentation on the first base text data and the second base text data according to the sub-sections;
    performing second data segmentation on the third base text data independent of the sub-sections; and
    mapping, to the sub-sections, the first sub-text components, the second sub-text components, and the third sub-text components, as determined by the first data segmentation and the second data segmentation.

6. The computer-implemented method of claim 5, wherein the mapping of the first sub-text components, the second sub-text components, and the third sub-text components to the sub-sections is based on first similarities between the first sub-text components and the third sub-text components and second similarities between the second sub-text components and the third sub-text components.

7. The computer-implemented method of any of claims 2-6, wherein the extracting of the third base text data comprises extracting the third base text data from a text component and an image component of the reference material; and/or the method further comprising:

    forming a second sub-output text component based on one of the first sub-section text components that corresponds to the second sub-section and based on one of the second sub-text components that corresponds to the second sub-section, and
    generating second sub-output text data of the second sub-section by performing, based on the second sub-output text component, the secondary STT conversion on a second sub-audio component that corresponds to the second sub-section.

8. The computer-implemented method of any of the previous claims, wherein the generating of the first sub-output text data comprises:

determining first sub-section keywords from the first sub-section text component using a language model; and

performing the secondary STT conversion on the first sub-audio component based on the first sub-section keywords;

wherein preferably the generating of the second base text data is performed by one or more processors of a first type,

the determining of the key frames, the generating of the first base text data, and determining of the first sub-text components and the second sub-text components are performed by one or more processors of a second type, and

the determining of the first sub-section keywords is performed by one or more remote processors.

9. The computer-implemented method of any of claims 1-8,

wherein the first base text data are first text words;

wherein the second base text data are second text words;

wherein forming a first sub-section text component comprises determining a chronological sequence of groupings of the first text words and the second text words, each grouping including at least one of the first text words and at least one of the second text words, wherein the groupings are formed based on inter-frame similarities computed between frames of the image sequence,

and generating keywords of the respective groupings; and

wherein generating the first sub-output text data comprises generating output text words by performing second STT conversion on the audio component of the input AV data, wherein the second STT conversion is informed by the keywords, wherein preferably keywords are generated by inputting the groupings to a langue model that generates the keywords, wherein preferably the output text words respectively correspond to the groupings, and wherein preferably the similarities are pixel-based similarities.

10. A non-transitory computer-readable storage medium storing instructions that, when executed by a processor, cause the processor to perform the method of any of the previous claims.

11. An electronic device comprising:

one or more processors; and

a memory storing instructions that when executed by the processor cause the electronic device to:

determine sub-sections of audio visual (AV) data according to similarities between image frames of an image sequence of input audio visual (AV) data, and wherein the sub-sections include a first sub-section and a second sub-section;

generate first base text data by performing character recognition on the image sequence , wherein first sub-text components of the first base text data respectively correspond to the sub-sections;

generate second base text data by performing primary speech-to-text (STT) conversion on an audio component of the input AV data, wherein the audio component of the input AV data comprises sub-audio sections respectively corresponding to the sub-sections, and wherein second sub-text components of the second base text data respectively correspond to the sub-sections;

determine a first sub-section text component based on one of the first sub-section text components that corresponds to the first sub-section and based on one of the second sub-text components that corresponds to the first sub-section; and

generate first sub-output text data of the first sub-section by performing secondary STT conversion, according to the first sub-section text component, on a first of the sub-audio components that corresponds to the first sub-section.

12. The electronic device of claim 11, wherein the instructions, when executed by the one or more processors, cause the electronic device to:
extract third base text data from a reference material associated with the input AV data.

13. The electronic device of claim 12, wherein the instructions, when executed by the one or more processors, cause the electronic device to:
determine third sub-text components of the third base text data based on a segmentation of the reference material.

14. The electronic device of claim 12, wherein the generating the first sub-output text data is further based on one of the third sub-text components that corresponds to or is mapped to the first sub-section; and/or
wherein the instructions, when executed by the one or more processors, cause the electronic device to:

perform first data segmentation on the first base text data and the second base text data according to the sub-sections,
perform second data segmentation on the third base text data based on the segmentation, and
map, to the sub-sections, the first sub-text components, the second sub-text components, and the third sub-text components, which are determined by the first data segmentation and the second data segmentation;
wherein preferably the mapping the first sub-text components, the second sub-text components, and the third sub-text components to the sub-sections is based on first similarities between the first sub-text components and the third sub-text components and second similarities between the second sub-text components and the third sub-text components.

15. The electronic device of any of the claims 11-14, wherein the instructions, when executed by the one or more processors, cause the electronic device to:

determine a second sub-output text component based on one of the first sub-section text components that corresponds to the second sub-section and based on one of the second sub-text components that corresponds to the second sub-section; and
generate second sub-output text data of the second sub-section by performing, based on the second sub-output text component, the secondary STT conversion on a second sub-audio component that corresponds to the second sub-section.

```
                        ┌──────────┐
                        │  Start   │
                        └────┬─────┘
                             │
                             ▼
              ┌──────────────────────────────┐
              │      Receive input AV data    │─── 110
              └──────────────┬───────────────┘
                             │
        ┌────────────────────┼────────────────────────────────┐
        │                    │                                 │
        ▼  121               ▼  130                            ▼  140
┌───────────────────┐ ┌───────────────────────┐   ┌───────────────────────┐
│ Parse image       │ │ Perform primary STT   │   │ Perform text extraction│
│ sequence of       │ │ conversion on         │   │ on reference material  │
│ input AV data     │ │ audio component of    │   │                        │
└────────┬──────────┘ │ input AV data         │   └───────────────────────┘
         │            └───────────────────────┘
         ▼  122
┌───────────────────┐
│ Perform character │
│ recognition on    │
│ key frames        │
└───────────────────┘
```

Perform character recognition on key frames 122

Perform primary STT conversion on audio component of input AV data 130

Perform text extraction on reference material 140

Fuse base text data 150

Perform secondary STT conversion using sub-section text component of each sub-section 160

End

FIG. 1

FIG. 2

FIG. 3

it1, at1, (rt1)          it2, at2, (rt4)          it3, at3, (rt3)

Input AV data
410                                                                    · · ·  → Time

s1              s2              s3

Output text data
460

so1             so2             so3              · · ·

FIG. 4

Sub-section text
component 501

Keyword extraction
command 502

Language model
510

Sub-section keywords
511

FIG. 5

Sub-output text data
601

Sub-section keywords
602

Correction command
603

Language model
610

Corrected sub-output
text data
611

FIG. 6

Completion 706

First processor 710 | Primary STT 711

Secondary STT 712

Second processor 720 | Parsing and character recognition 721 | Text extraction 722 | Fusion 723

Third processor 730 | Keyword extraction 731 | Text correction 732

FIG. 7

INPUT 1
Completion
801

INPUT 2
Completion
802

First
processor
810

| Primary STT 811 | Primary STT 812 |
|---|---|

INPUT1  INPUT2

Secondary STT 813

INPUT1

Secondary STT 814

INPUT2

Second
processor
820

| Parsing and character recognition 821 | Text extraction 822 | Fusion 823 | Parsing and character recognition 824 | Text extraction 825 | Fusion 826 |
|---|---|---|---|---|---|

INPUT1

INPUT2

Third
processor
830

Keyword extraction 831

INPUT1

Text correction 832

INPUT1

Keyword extraction 833

INPUT2

Text correction 834

INPUT2

FIG. 8

EP 4 765 111 A1

INPUT 1
Completion
901

INPUT 2
Completion
902

First
processor
910

| Primary STT 911 | Primary STT 912 | | Secondary STT 913 | | Secondary STT 914 |

INPUT1 — INPUT2 — INPUT1 — INPUT2

Second
processor
920

| Parsing and character recognition 921 | Fusion 922 | Parsing and character recognition 923 |

INPUT1 — INPUT2

Third
processor
930

| Keyword extraction 931 | Keyword extraction 932 | Fusion 933 |

INPUT1 — INPUT2

Fourth
processor
940

| Keyword extraction 941 | Keyword extraction 942 | Text correction 943 | Text correction 944 |

INPUT1 — INPUT2 — INPUT1 — INPUT2

FIG. 9

Start

Determine key frames based on similarity between image frames of image sequence of input AV data ~ 1010

Generate first base text data by performing character recognition on key frames ~ 1020

Generate second base text data by performing primary STT conversion on audio component of input AV data ~ 1030

Determine first sub-text components of first base text data and second sub-text components of second base text data based on sub-sections of input AV data corresponding to key frames ~ 1040

Generate first sub-output text data of first sub-section by performing secondary STT conversion on first sub-audio component of first sub-section among audio components based on first sub-section text component of first sub-section of sub-sections among first sub-text components and second sub-text components ~ 1050

End

FIG. 10

1100

1110

**One or more processors**

1120

**Memory**

1160

1130

**Storage**

1140

**I/O device**

1150

**Network interface**

FIG. 11

Europäisches
Patentamt
European
Patent Office
Office européen
des brevets

# EUROPEAN SEARCH REPORT

**Application Number**

EP 25 21 4259

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 944 234 A1 (ATOS GLOBAL IT SOLUTIONS AND SERVICES PRIVATE LTD [IN]) 26 January 2022 (2022-01-26) | 1-7, 10-15 | INV. G10L15/24 G10L15/26 |
| A | * figures 1-4 * <br> * paragraphs [0013] - [0059] * <br> ----- | 8,9 | ADD. G10L15/22 |

**TECHNICAL FIELDS SEARCHED (IPC)**

G10L
G06F

The present search report has been drawn up for all claims

| Place of search | Date of completion of the search | Examiner |
|---|---|---|
| Munich | 18 February 2026 | Ramos Sánchez, U |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 21 4259

This annex lists the patent family members relating to the patent documents cited in the above-mentioned European search report.
The members are as contained in the European Patent Office EDP file on
The European Patent Office is in no way liable for these particulars which are merely given for the purpose of information.

18-02-2026

| Patent document cited in search report | Publication date | Patent family member(s) | Publication date |
|---|---|---|---|
| EP 3944234 A1 | 26-01-2022 | EP 3944234 A1 | 26-01-2022 |
| | | US 2022028391 A1 | 27-01-2022 |

EPO FORM P0459

For more details about this annex : see Official Journal of the European Patent Office, No. 12/82